# EUROPEAN PATENT SPECIFICATION

(11) **EP 4 513 044 B1**
(45) Date of publication and mention of the grant of the patent: **04.11.2026**
(21) Application number: 24195096.3
(22) Date of filing: 19.08.2024
(51) Int. Cl.: F16B 15/00, E04B 9/00, F16B 45/00

(54) **KITS, ASSEMBLIES AND METHODS FOR SUSPENDING OBJECTS FROM CEILINGS**
KITS, ANORDNUNGEN UND VERFAHREN ZUM AUFHÄNGEN VON OBJEKTEN AN DECKEN
KITS, ENSEMBLES ET PROCÉDÉS POUR SUSPENDRE DES OBJETS À DES PLAFONDS

(30) Priority: 22.08.2023 US 202363533942 P
(43) Date of publication of application: 26.02.2025
(73) Proprietor: 3M Innovative Properties Company, Saint Paul, MN 55133-3427 (US)
(72) Inventor: Noonan, John, St. Paul, MN, 55133 (US)
(74) Representative: Mathys & Squire

(56) References cited:
- AU-B2- 2019 272 779
- US-A1- 2022 279 945

## Description

### Background

Numerous products and devices exist for mounting items on walls and related surfaces.

### Summary

In broad summary, herein are disclosed arrangements for suspending one or more items from a ceiling. In some aspects, the arrangements may use a base plate along with prong-bearing insert plates that are attached to the ceiling. At least one item may be connected to a load-bearing connector of the base plate, so that a load that is applied to the base plate as a result of the mass of the item produces a force vector that is at least generally aligned with a normal axis of the base plate. These and other aspects will be apparent from the detailed description below. In no event, however, should this broad summary be construed to limit the claimable subject matter, whether such subject matter is presented in claims in the application as initially filed or in claims that are amended or otherwise presented in prosecution.

### Brief Description of the Drawings

Fig. 1 is a perspective view of an exemplary anchor, viewed from generally underneath with insert plates of the anchor in an opened configuration.
Fig. 2 is a similar perspective view of the exemplary anchor of Fig. 1 with the insert plates in a closed configuration.
Fig. 3 is a side view of the exemplary anchor of Fig. 1 as installed on a ceiling and supporting an item, with the insert plates in the closed configuration.
Fig. 4 is a side view of another exemplary anchor, as installed on a ceiling and supporting an item.
Fig. 5 is an isolated perspective view of an exemplary base plate of an anchor.
Fig. 6 is a side view of another exemplary anchor, as installed on a ceiling and supporting an item by way of an accessory.
Fig 7 is a perspective view of another exemplary anchor with a decorative cover installed on the anchor.
Fig. 8 is a side view of another not claimed exemplary anchor, as installed on a ceiling.

Like reference numbers in the various figures indicate like elements. Some elements may be present in identical or equivalent multiples; in such cases only one or more representative elements may be designated by a reference number but it will be understood that such reference numbers apply to all such identical elements. Unless otherwise indicated, all figures and drawings are not to scale and are chosen for the purpose of illustrating different embodiments of the invention. In particular the dimensions of the various components are depicted in illustrative terms only, and no relationship between the dimensions of the various components should be inferred from the drawings, unless so indicated.

Vertical and horizontal directions and associated terms have their ordinary meaning with respect to the Earth. Terms such as upward and downward are defined with respect to a ceiling on which an anchor is mounted, with upward denoting a generally vertical direction toward the ceiling, and downward denoting a generally vertical direction away from the ceiling. Although terms such as "first" and "second" may be used in this disclosure, it should be understood that those terms are used in their relative sense only, unless otherwise noted. As used herein as a modifier to a property or attribute, the term "generally", unless otherwise specifically defined, means that the property or attribute would be readily recognizable by a person of ordinary skill but without requiring a high degree of approximation. The term "substantially", unless otherwise specifically defined, means to a high degree of approximation. The term "essentially", unless otherwise specifically defined, means to an extremely high degree of approximation. The term "configured to" and like terms is at least as restrictive as the term "adapted to", and requires actual design intention to perform the specified function rather than mere capability of performing such a function. Terms such as "a" and "an", particularly when used in combination with comprises, comprising, and like terms, will be understood to mean "at least one"; e.g. the phrase "comprising an accessory" means "comprising at least one accessory".

### Detailed Description

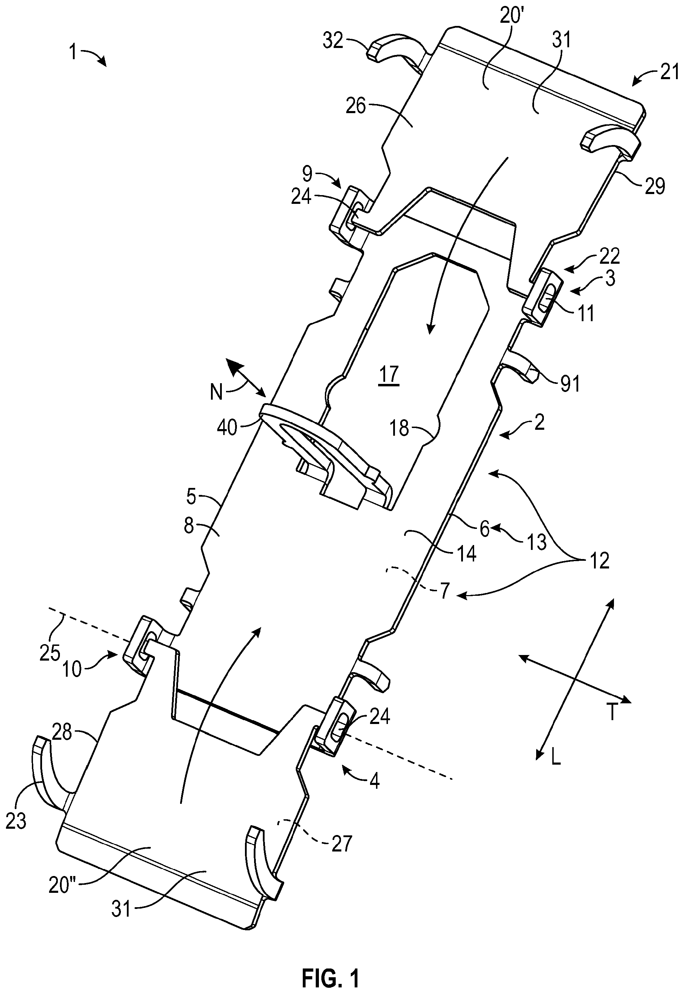

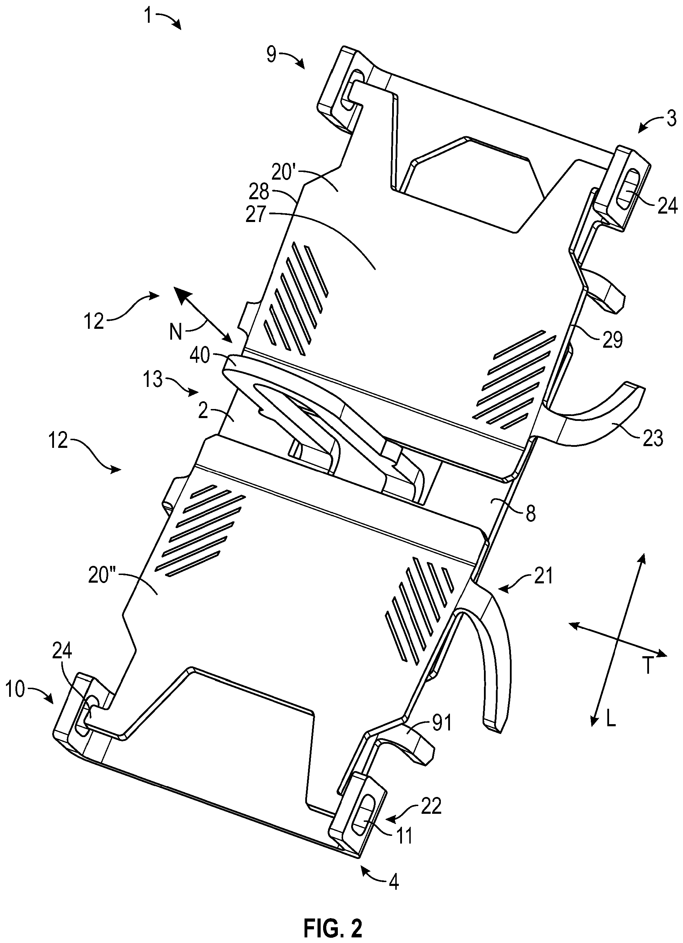

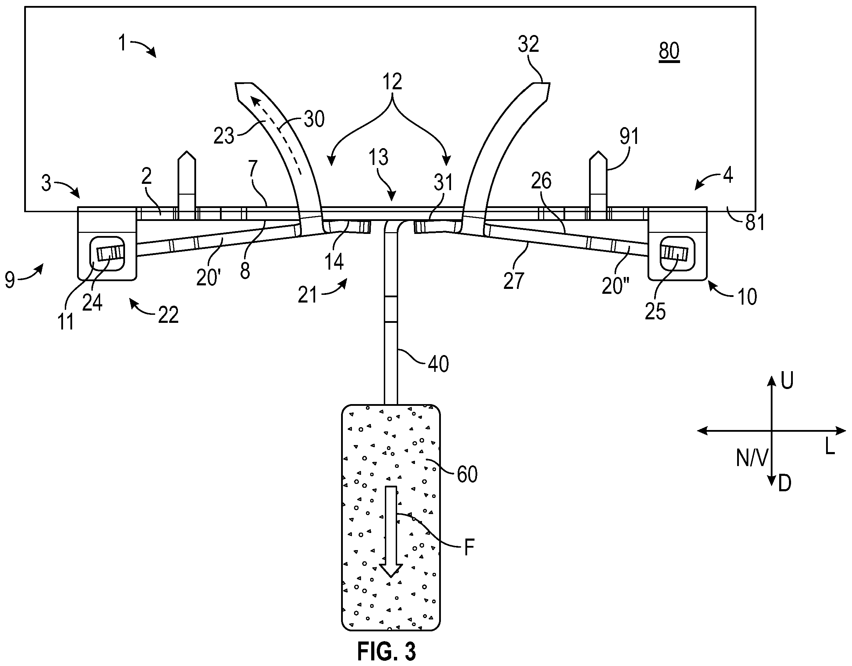

In some embodiments, the arrangements disclosed herein may rely on an anchor 1 as depicted in exemplary embodiment in Figs. 1-3. According to the invention, an anchor 1 comprises a base plate 2 and at least two insert plates 20. In the depicted embodiment, insert plates 20 are identical except for their position and orientation; insert plates will be referred to generically by reference number 20 but individual insert plates will occasionally be denoted as 20' and 20" for ease of description. Exemplary anchor 1 is depicted in Fig. 1 in perspective view with insert plates 20' and 20" of the anchor in an "open" position, and in Fig. 2 in perspective view with insert plates 20' and 20" in a "closed" position. Fig. 3 depicts anchor 1 in side view, as installed on a ceiling 80, with the insert plates in the "closed" position.

According to the invention, a base plate 2 of an anchor 1 exhibits a longitudinal axis L with a first longitudinal end 3 and a second longitudinal end 4, and a transverse axis T and first and second transverse edges 5 and 6. As mounted on a ceiling, base plate 2 will have an upward major surface 7 that faces upward, toward the ceiling (and that may, in some embodiments, be in direct contact with the ceiling) and a lower major surface 8 that faces downward, away from the ceiling. Often, when such a base plate is mounted on a ceiling in the manner described herein, its longitudinal axis L and its transverse axis T will both lie in a horizontal plane that is at least generally parallel to the ceiling. The base plate further comprises a normal axis N that is perpendicular to the longitudinal and transverse axes and that, when the base plate is mounted on the ceiling, will be at least generally aligned with the above-defined vertical direction. The L, T and N axes are denoted in Fig. 1 for exemplary anchor 1, noting that these and other positional/orientational characterizations herein, will be understood to apply when the anchor and its components are installed on a ceiling.

In many embodiments, a base plate 2 may be, or include, a single, integral piece of material (e.g. a metal such as steel or aluminum, an organic polymeric material such as an injection-molded piece, etc.) with portions of the single, integral piece being formed, cut, bent, molded, etc., to form various components and features of the base plate. For example, in some embodiments, hinge-guides, if present, may be integral portions of base plate 2. In some embodiments any such hinge-guides may extend generally downward from base plate 2. In some embodiments, these hinge guides may be present as a first pair of transversely-spaced hinge guides 9 at a first longitudinal end 3 of base plate 2 and a second pair of transversely-spaced hinge guides 10 at a second, opposing longitudinal end 4 of base plate 2, as seen e.g. in Fig. 1.

In some embodiments, any or all such hinge guides may each take the form of a rail that extends generally downwardly from base plate 2 and that is elongate with a long axis that is at least generally aligned with the longitudinal axis of base plate 2 and of anchor 1 as a whole. In some embodiments each hinge-guide may extend integrally downward from a transverse edge 5 or 6 of base plate 2. Each such hinge-guide may comprise an orifice 11 into which a hinge-post 24 of an insert plate 20 may be seated as described below. In many embodiments, the hinge-guides may be located at the longitudinal ends of the base plate. Here and elsewhere, the terminology of "at" does not necessarily require that a hinge guide (in particular, an orifice 11 thereof) must be located exactly on a terminal edge of a longitudinal end 3 or 4 of the base plate. Rather, this terminology will be understood to mean that the hinge-guide, orifice, etc., is located at least near (i.e. proximate) such a longitudinal end, without necessarily being exactly on the terminal edge of the end.

In some embodiments, other features may be present on base plate 2. The invention includes the presence of a load-bearing connector 40, which allows an item to be directly or indirectly connected to base plate 2, and which is discussed in detail later herein. In some embodiments, other (e.g., optional) features may be present on a base plate 2. Such feature may include e.g. straight spikes 91 as visible in Figs. 1-3, and whose role is discussed in more detail later herein.

In the depicted embodiment, and according to the invention, first and second insert plates 20 are present. For each insert plate 20, a non-prong-bearing end 22 of the insert plate 20 is pivotally connected to a longitudinal end 3 or 4 of base plate 2. In the depicted embodiment, this pivotal connection may be achieved by way of hinge-posts 24 of the non-prong-bearing end 22 of insert plate being seated into orifices 11 of a pair of transversely-spaced hinge-guides 9 or 10 of base plate 2. Such an arrangement can allow the insert plate 20 to rotate about an axis of (partial) rotation 25 that is aligned with the transverse axis of the base plate, and that is aligned with the orifices 11 of the base plate and with the hinge-posts 24 of the insert plate, in the general manner indicated in Fig. 1. In many embodiments, the hinge-posts 24 of an insert plate may be present as a pair, the hinge-posts being transversely-spaced apart from each other with each hinge-post facing transversely outward so as to be seatable into an orifice of a hinge-guide. In some embodiments, each hinge-guide of the pairs of hinge-guides 9 and 10 may extend generally downward from base plate 2 so that orifices 11 (and thus hinge-posts 24 and the transverse axis of rotation 25 of the insert plate) are downwardly offset from base plate 2, as evident from the side view of Fig. 3.

Each insert plate 20 will also comprise a prong-bearing end 21 that generally opposes the non-prong-bearing end 22; this end 21 of the insert plate will comprise one or more curved prongs 23 that each extends along an arc to a ceiling-penetrating upper end 32. The terminology of an insert plate having a prong-bearing end, that a prong extends from such an end, and so on, does not require that the prong must extend from the terminal edge of the insert plate. Rather, the term "end" denotes an area that is proximate the terminal edge of the insert plate; a prong may extend from anywhere in this area. Indeed, in the exemplary design of Figs. 1-3, the curved prongs 23 do not extend from the terminal edge of "end" 21 of insert plate 20; rather, a portion of end 21 of insert plate 20 extends (along the longitudinal axis of the base plate to which the insert plate is connected) beyond where the prongs originate. Such arrangements are encompassed within the disclosures herein.

In some embodiments, an insert plate 20, e.g. including the curved prongs 23 and hinge-posts 24 thereof, may be in the form of a single, integral piece of material such as metal. In some embodiments the insert plates 20 can be pivotally connected to the base plate (e.g. by permanently seating the hinge-posts 24 of the insert plates 20 into respective orifices 11 of hinge-guides 9 and 10 of the base plate) in a permanent manner so that the insert plates cannot be disconnected from the base plate in the factory, with the resulting anchor being provided to an end user in the general form depicted in Figs. 1-3. (In some embodiments, the insert plates may not be permanently connected to the base plate, as discussed in detail later herein.)

To mount an anchor 1 on a ceiling, an end user may begin with anchor 1 generally in a configuration shown in Fig. 1 (noting that in some embodiments an anchor 1 may be packaged and supplied to an end user in a configuration as shown in Fig. 2; if so, the end user can manipulate the insert plates into the general configuration shown in Fig. 1 as a prelude to installation). The anchor may be brought to a desired location underneath a ceiling 80, and the base plate 2 of the anchor may be held so that the upward major surface 7 of base plate 2 is closely abutting (e.g. is in contact with) the lower surface 81 of the ceiling 80. In some embodiments, base plate 2 may be held against the ceiling with one hand, while the other hand is used to manipulate the insert plates 20 as described below. However, in many embodiments, it may be desirable that the base plate 2 can be maintained in this condition (held with the upward major surface 7 of the base plate in close abutment with the lower surface 81 of the ceiling) without needing to be constantly held by hand. Various arrangements may facilitate this. Thus in some embodiments, the base plate 2 may comprise one or more straight spikes 91. (In many embodiments spikes 91 may extend integrally from base plate 2.) By definition, any such straight spike 91 extends linearly, at least essentially upward, from base plate 2 (disregarding any curvature at the junction of the spike with the base plate). By essentially upward is meant that the spike 91 extends linearly upward so that its long axis is oriented within plus or minus 5 degrees of normal to the base plate, along the entirety of the spike excepting the junction of the lower end of the spike with the base plate. Straight spikes 91 are thus linear rather than curved in the manner of curved prongs 23. A spike-equipped base plate 2 may be urged (manually) upward toward a ceiling 80 so that spikes 91 penetrate into the ceiling, following a linear spike-penetration path carved out by their ceiling-penetrating tips, until the upward major surface 7 of the base plate is closely abutting (e.g. is in contact with) the ceiling surface 81. The base plate 2 and ceiling 80 may now be in a configuration as shown in Fig. 3, with the straight spikes 91 serving to hold the base plate 2 in this position for long enough that manipulations of the insert plates can be carried out.

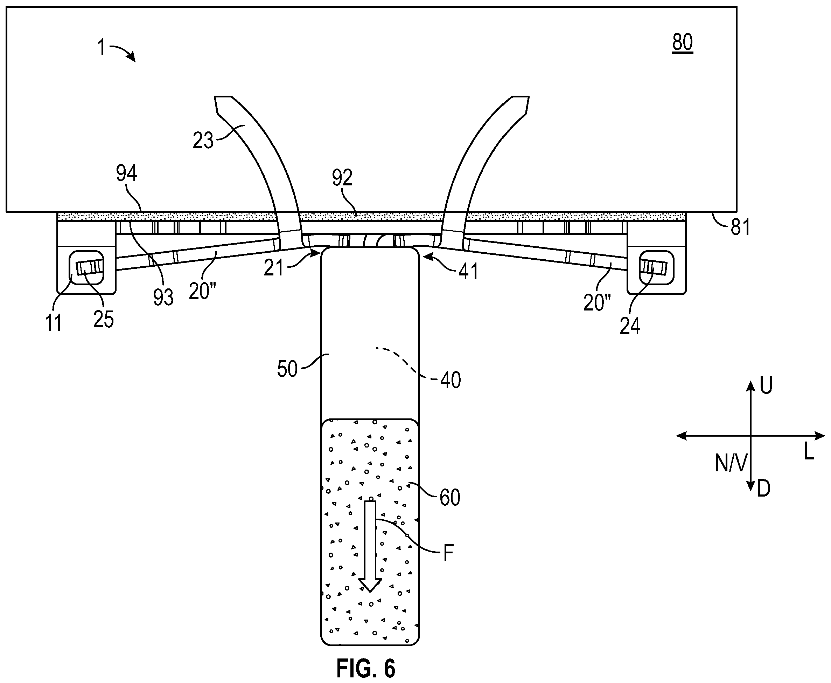

In another exemplary variation, a layer of pressure-sensitive adhesive (PSA) 92 may be used as illustrated in Fig. 6. In some embodiments, such a layer of PSA may be pre-installed onto the base plate 2, e.g. with a lower major surface 93 of the PSA being adhesively bonded to the upward major surface 7 of the base plate. In some such embodiments, a release liner may be present on the upward major surface 94 of the PSA. After removing the release liner, an end-user can move the base plate 2 upward toward the ceiling 80 until the upward major surface 94 of the PSA contacts the lower surface 81 of the ceiling and adhesively bonds thereto. The PSA can then hold the base plate in position long enough for manipulations of the insert plates to be carried out. In some such embodiments (e.g. as in the exemplary depiction of Fig. 6) no straight spikes may be present. However, in some embodiments, straight spikes and a layer of PSA may be used in combination.

It will be appreciated that in embodiments in which a layer of PSA is present, the upward major surface 7 of the base plate may not necessarily come into direct contact with the lower surface 81 of ceiling 80. Thus, the concept of the upward major surface 7 of the base plate "closely butting" the ceiling does not necessarily require that upward major surface 7 of the base plate must actually be in direct contact with the ceiling. Rather, to "closely abut" will be understood to mean that the upward major surface 7 of base plate 2 will be positioned within 1 mm of the lower surface 81 of ceiling 80. (This definition of "closely abut" applies to other surfaces, including the positioning of a contact area of an insert plate and a complementary contact surface of a base plate as discussed below.) In many embodiments, (e.g. when a layer of PSA is not present), actual contact between these surfaces may occur.

With base plate 2 held against the ceiling (in whatever manner), the insert plates 20 may then be (partially) rotated about their axes of rotation 25 in the general manner indicated by the curved arrows in Fig. 1. This will typically be done manually, by the fingers of the user. The insert plates 20 will thus move from an "open" position as in Fig. 1, toward a "closed" position as in Fig. 2. At some point during this movement, the ceiling-penetrating ends 32 of curved prongs 23 will encounter the ceiling 80. The user can exert force e.g. on the lower surfaces 27 of the insert plates 20 so that the ceiling-penetrating end 32 of each curved prong 23 will penetrate into the ceiling 80, followed by the rest of the curved prong. Each curved prong will follow an arcuate prong-penetration pathway 30 that is created (hollowed out) by the continued penetration of the ceiling-penetrating end 32 into the ceiling.

This manual pressing force is maintained until the curved prongs 23 have fully penetrated into the ceiling 80, and until at least some areas of the upward major surfaces 26 of the insert plates 20 closely abut the lower major surface 8 of base plate 2. The insert plates 20, and anchor 1 as a whole, will now be in a ceiling-mounted configuration as shown in Fig. 3 with each curved prong 23 residing in its arcuate prong-penetration path 30. In some embodiments, when the anchor is in this installed (ceiling-mounted) configuration, a contact area 31 at or near the prong-bearing end 21 of each insert plate 20 will closely abut (in many instances, will be in direct contact with) a complementary contact area 14 of base plate 2, as indicated in Fig. 3.

An arrangement of this general type, in which a base plate has been positioned with its upward major surface 7 closely abutting a ceiling and insert plates 20 have been manipulated to a "closed" position as described above so that the curved prongs of the insert plates are embedded in the ceiling and so that at least some areas of the insert plates closely abut the lower major surface 8 of the base plate, will be referred to herein as causing the base plate to be "pinned" against the ceiling by the insert plates. In other words, the base plate 2 is sandwiched between the insert plates and the ceiling, as readily evident from Fig. 3. (As discussed in detail later herein, it is not necessarily required that the insert plates must be permanently connected to the base plate in order to achieve such an arrangement.) Such an arrangement thus allows the base plate to be securely held to the ceiling by the insert plates.

An arrangement of the general type depicted in Figs. 1-3, in which the curved prongs of the insert plates are widely spaced from each other when the insert plates are in the open configuration (as in Fig. 1), and closely approach each other when the insert plates are in the closed, ceiling-mounted configuration (as in Figs. 2 and 3) will be referred to herein as a "converging" arrangement of the curved prongs. Such a converging arrangement may be contrasted with a "diverging" arrangement in which the prongs of the respective insert plates get farther apart from each other as the insert plates are rotated toward their closed, ceiling-mounted configuration. In some converging arrangements, the hinge-posts 24 of the insert plates 20 can be located toward the longitudinal ends 3 or 4 of the base plate 2 with the transverse axes of rotation of the insert plates thus being displaced longitudinally far away from the longitudinal center of the anchor as a whole, as in the exemplary arrangements of Figs. 1-3. However, this is not strictly necessary; as discussed in detail later herein, in some embodiments it is possible for a transverse axis of rotation of one or more insert plates to be located near or at the longitudinal center of an anchor, while still achieving a converging arrangement.

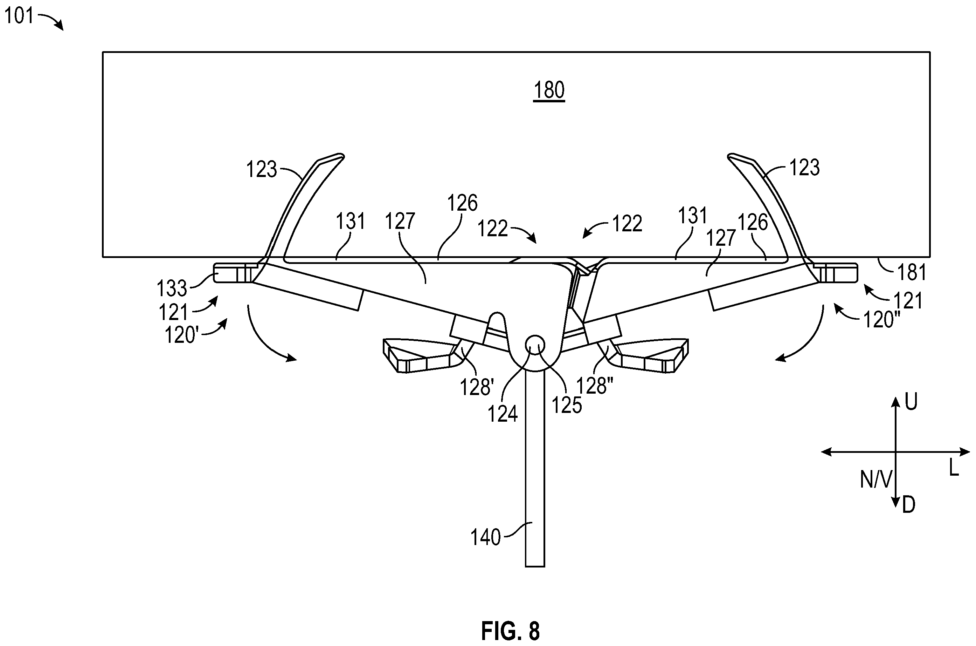

In some embodiments, the configuration (including in particular the direction of curvature) of the curved prongs may be such that when the insert plates are in their closed configuration as in Fig. 3, with the curved prongs closely approaching each other, the ceiling-penetrating ends 32 of the curved prongs 23 of one insert plate 20' will curve away (generally along the longitudinal direction of the base plate and of the anchor as a whole) from the ceiling-penetrating ends 32 of the curved prongs 23 of the other insert plate 20", as is readily apparent in Fig. 3. Such an arrangement of the curved prongs (which, again, will be evaluated when the insert plates are in their closed position) will be referred to as a "spreading" arrangement. In some embodiments, a spreading arrangement of the curved prongs may be preferred. In some particular embodiments, an anchor as disclosed herein may comprise insert plates and curved prongs that are arranged in a converging and spreading arrangement (the two not being mutually exclusive), as illustrated in Fig. 3 and in many of the other Figures herein. In some embodiments, a "merging" arrangement, in which, with insert plates in their closed configuration, ceiling-penetrating ends of the prongs of the insert plates curve toward each other rather than away from each other, may be used. In some particular embodiments, an anchor may comprise insert plates and curved prongs that are arranged in a converging and merging arrangement, as depicted in the exemplary embodiment of Fig. 8 and as discussed in detail later herein.

Various aspects of base plates, insert plates, and, in particular, curved prongs and ways in which they can be configured and arranged, are discussed e.g. in U.S. Patent Application Publications 2021/0169241, 2021/0298497, and 2021/0207645; in AU 2019 272 779 B2; in U.S. Provisional Application 63/088246 and in the resulting PCT application published as International Patent Application Publication WO/2022/074511; and in U.S. Provisional Application 63/279809 and in the resulting PCT application published as International Patent Application Publication WO/ 2023/089487, all of which describe the many and various types and designs of base plates, insert plates, and curved prongs with which the arrangements disclosed herein may be used.

In some embodiments, curved prongs 23 may be located at or near (e.g., may integrally extend from) transverse edges 28 and 29 of an insert plate 20. In some such embodiments, the curved prongs 23 of the insert plate may be transversely spaced apart from each other at a distance such that when the insert plate 20 is moved into the closed position, the curved prongs will pass transversely outwardly of the transverse edges 5 and 6 of the base plate 2, as evident in Fig. 2. In many embodiments, the curved prongs 23 of the insert plates 20 may be the primary means by which the anchor 1 is held on a ceiling (and by which the weight of a suspended item is supported). That is, if any straight spikes 91 are present on base plate 2, they may serve primarily to hold base plate 2 in place at a desired location of a ceiling while the insert plates are manipulated to insert the curved prongs into the ceiling. (It is of course possible that in some circumstances that the straight spikes may provide at least some additional holding power in the final, ceiling-mounted anchor.) Similar considerations hold for any layer of pressure-sensitive adhesive, if present.

The arrangements disclosed herein allow an item to be hung from, e.g., a ceiling. The term "ceiling" denotes any entity comprising an at least generally horizontally oriented major surface on which an anchor (or, in general, an assembly) can be mounted. In many instances, the ceiling will be an indoor ceiling, e.g. within a residence, office building, retail establishment, and so on. In some instances the ceiling may be an outdoor ceiling, e.g. of a shelter, pavilion, or some other structure that is not completely enclosed. By generally horizontally oriented means within plus or minus 20 degrees of being strictly horizontal. In some embodiments, a ceiling on which an anchor is mounted, may be at least substantially horizontally oriented, meaning within plus or minus 10 degrees of strictly horizontal. In some embodiments, a ceiling on which an anchor is mounted, may be at least essentially horizontally oriented, meaning within plus or minus 5 degrees of strictly horizontal. In some embodiments, such a ceiling may be nominally "horizontal", as with ceilings (e.g. ceilings that are not cathedral or sloped ceilings) of many common rooms, offices, and so on. Even nominally horizontal ceilings may still vary a few (e.g. 1 or 2) degrees from being strictly horizontal, given the tolerances and statistical variations inherent in building construction.

In many embodiments, an anchor 1 as described above may be mounted on a ceiling 80 that is comprised of sheet rock (also referred to as plasterboard, gypsum board, etc.). Sheet rock is generally made of calcium sulfate dihydrate (gypsum), typically extruded between thick sheets of facing paper and backing paper. Sheet rock has been found to be soft enough to be amenable to being penetrated with curved prongs in the general manner described above, while being stiff enough to firmly hold the prongs (and thus the entire anchor) in place once installed. The lengths of the prongs can be varied to allow selection for a specific thickness of sheet rock. (Sheet rock that is commonly used in ceilings is often, e.g., 5/8 inch (15,9 mm) in nominal thickness). The curved prongs can have a fixed radius of curvature, or have varying radii of curvature at various points, either discretely or continuous, along the prong. The curved prongs may have any suitable aspect ratio. Often, the prongs may comprise tapered ends and/or may exhibit gradual taper along a considerable portion of their length. As noted, in some embodiments the prongs can be integral portions of an insert plate, formed from a monolithic piece of material that has been bent or otherwise articulated at select locations to form both the insert plate and the prongs. In various embodiments, an anchor, and its various base plates, insert plates, curved prongs, etc., may be made of metal, e.g. stainless steel, titanium, cobalt-chromium alloy, or a shape-memory alloy such as an alloy of nickel and titanium (e.g., Nitinol). Many geometric and compositional arrangements of prongs that may be used in the present arrangements, are described in the documents incorporated herein.

The exemplary base plate 2 as depicted in Figs. 1-3 comprises at least one generally centrally located load-bearing connector 40. By generally centrally located is meant located in a longitudinally central portion of the base plate, according to the terminology provided below. By "connector" is meant an entity that is attached to (e.g., that integrally extends from) base plate 2 and that is configured to facilitate the connecting of an item, indirectly or directly, to base plate 2, so that the item can be supported by the base plate (and the anchor as a whole) so as to be suspended from a ceiling on which the anchor is mounted. By load-bearing is meant that essentially the entire weight of the suspended item is supported via a force-transmission pathway that passes through the connector.

A load-bearing connector 40 may take any suitable form. A relatively simple form is depicted in the exemplary embodiment of Figs. 1-3, in which connector 40 comprises an elongated arch that defines an elongated through-slot that allows e.g. a cable, wire, screw, pin or bolt to be passed therethrough in order to connect an item to the connector. However, any connector, of any type, may be used. A connector may make use of e.g. one or more internally or externally threaded projections (e.g. an externally-threaded post or an internally-threaded bore), a keyhole-style projection, one or more eyelets, one or more clips, latches, snaps, or the like, and so on. In some embodiments such a connector 40 may be, or include, a component that integrally extends from base plate 2, as with the exemplary connector 40 depicted in Figs. 1-3. In some such embodiments, an integral connector 40 may be obtained by cutting the base plate 2 and bending at least some of the cut portion away from the major plane of the base plate, as in the exemplary arrangement depicted in Figs. 1-3. Deforming a cut portion of the base plate to form a connector 40 in this manner may leave behind a through-opening 17 as indicated in Fig. 1.

In some embodiments such a load-bearing connector may extend at least generally downward from the base plate. By at least generally downward is meant at an angle that is within plus or minus 20 degrees from the normal axis of the base plate. In some embodiments such a connector may extend at least substantially downward, meaning within plus or minus 10 degrees from the normal axis. In some embodiments such a connector may extend at least essentially downward, meaning within plus or minus 5 degrees from the normal axis.

In some embodiments such a load-bearing connector may be at least generally centrally located as noted above, meaning that it extends from a longitudinally central portion (indicated in general as portion 12 in Figs. 1 and 3) of the base plate. This central portion 12 is defined with respect to the longitudinal center of the base plate and the longitudinal axis of the base plate. The longitudinal axis has been previously defined (and is indicated as axis L on several Figures). The longitudinal center is an imaginary line that runs transversely across the base plate and that is located halfway between the longitudinal ends of the base plate (in the exemplary design shown in Figs. 1-3, the longitudinal center of the base plate is located very close to the junction of connector 40 with base plate 2).

By a longitudinally central portion 12 of the base plate is meant an area of the base plate whose longitudinal boundaries (demarcating the edges of the area that are farthest, along the longitudinal axis, away from the above-defined longitudinal center of the base plate) are no further from the longitudinal center of the base plate than 30 % of the distance from the longitudinal center of the base plate to a longitudinal end of the base plate. (Alternatively phrased, the longitudinally central portion of a base plate is an area that occupies the longitudinally central-most 30 % of the base plate.) By way of a specific example, one such longitudinal boundary that defines an edge of the central portion of the base plate 2 as shown in Figs. 1 and 3, is located approximately even with the pair of scalloped semicircles 18 that are visible on edges of the above-described through-opening 18 of base plate 2. (In the depicted design, the straight spikes 91 are all located outside of this longitudinally central portion 12.)

In some embodiments a connector 40 may extend from a longitudinally centermost portion (indicated in general as portion 13 in Figs. 1 and 3) of the base plate. By centermost is meant an area whose longitudinal boundaries are no further than 15 % of the distance from the longitudinal center to a longitudinal edge of the base plate. In some embodiments a connector 40 may extend essentially from the longitudinal center of the base plate, meaning an area whose longitudinal boundary is no further than 5 % of the above-recited distance.

In some embodiments an item 60 that is desired to be suspended from a ceiling may be connected directly to a connector 40 of a base plate 2 of an anchor 1, as illustrated in generic, exemplary representation in Fig. 3. In some embodiments, one or more accessories 50 may be used to facilitate an indirection connection of an item to connector 40, as illustrated in generic, exemplary representation in Fig. 6. For purposes of these discussions, an anchor 1 is defined as an entity that is mountable onto a ceiling by inserting curved prongs of insert plates of the anchor into the ceiling. An accessory 50 is defined as an entity that is purposely configured to be installed onto an anchor (typically, after the anchor has been mounted onto a ceiling) so that one or more items 60 can be attached or otherwise connected to the accessory, so that the assembly formed by the accessory and the anchor can be used to support the one or more items. In many embodiments, the accessory may be removably installable onto the anchor, e.g. so that the accessory can be removed from the anchor at such time as it is desired to de-mount the anchor from the ceiling. By definition, any entity that is non-disconnectably connected to the anchor as the anchor is provided to an end user, is considered to be a part of the anchor rather than being an accessory.

In some embodiments an anchor and an accessory may be provided to an end user in a format in which the accessory is fitted onto the anchor. This may be done e.g. for space-savings in packaging of the product and/or so that an end user can see how the assembly is to be constructed in actual use. In some such cases, the accessory may be detached from the anchor in order to mount the anchor on a ceiling, after which the accessory can be installed on the ceiling-mounted anchor. Or, the accessory may e.g. hang loosely from the base plate of the anchor while the anchor is being installed on the ceiling. In some embodiments, only a single accessory will be used, the single accessory functioning to support the weight of whatever item is desired to be hung from the ceiling. The single accessory may take the form of e.g. a hook, a bracket, or, in general, any type of holder that is directly coupled to the connector 40 of the anchor and that can support the weight of any desired item. In some embodiments, two (or more) accessories may be present.

In some embodiments, an accessory 50 may serve another purpose in addition to e.g. supporting the weight of an item to be hung from a ceiling. In some particular embodiments, an accessory may provide a locking mechanism 41. By a locking mechanism is meant an entity, or a portion of an entity, that is purposely configured so that when an anchor (with its insert plates in a closed configuration as described above) is mounted to a ceiling, the entity or portion thereof is located so as to physically block the insert plates of the anchor from rotating outward relative to the base plate of the anchor. That is, such a locking mechanism can minimize any chances of an insert plate rotating downward so as become dislodged from the ceiling. Specifically, a locking mechanism can minimize any chance of an insert plate rotating outward so as to cause the curved prongs of the insert plate to retreat along their arcuate prong-penetration pathways. In some embodiments, this can be achieved by configuring the locking mechanism so that when it is in place, the locking mechanism physically abuts (e.g. contacts) the prong-bearing ends of the insert plates. An exemplary locking mechanism 41 of this general type, provided by uppermost portions of accessory 50 that are abutted against prong-bearing ends 21 of insert plates 20, is depicted in Fig. 6.

Thus in some embodiments an accessory may be configured so that when the accessory is installed on the anchor, one or more portions of the accessory will be positioned to serve as a locking mechanism. In some embodiments, a locking mechanism may be provided by a component of an anchor itself (e.g., by some component that is permanently attached to base plate 2) rather than by an accessory that is used with the anchor. It is emphasized that a locking mechanism may not be necessary in all cases, e.g. depending on the particular design of the anchor, the amount of weight it is configured to support, and so on. Thus, not all arrangements disclosed herein necessarily involve an accessory, or an anchor component, that provides a locking mechanism. In fact, the Working Examples presented herein do not make use of any locking mechanism of any type.

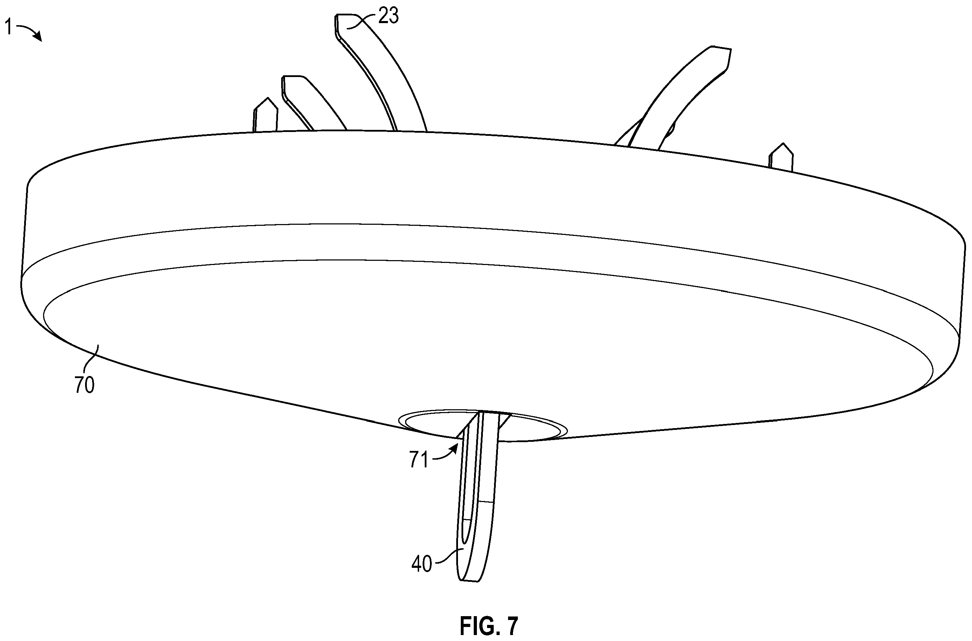

In some embodiments, an anchor 1 may accept a decorative cover 70 as shown in exemplary embodiment in Fig. 7. In some embodiments, such a cover 70 may be configured to downwardly cover the entirety of base plate 2 and/or the entirety of the first and second insert plates 20 so that these entities cannot be seen from underneath, as in the arrangement of Fig. 7. In some embodiments, such a cover 70 may comprise a through-opening (e.g. an elongate slot) 71 through which a connector 40 of the anchor 1 can downwardly extend. In some embodiments, such a cover 70 may be installable onto the anchor after the anchor is mounted to a ceiling. In various embodiments, such a cover 70 may be connectable to connector 40 (e.g. independently of the connecting of any item 60 and/or accessory 50 to connector 40), by any suitable mechanism, e.g. by way of a set of complementary detent features. In some embodiments, such a cover 70 may be purely decorative and may serve no other function. In some embodiments such a cover 70 may serve as an accessory 50; in some embodiments such a cover 70 may provide a locking mechanism 41. Any combination of these features and functionalities can be used.

The arrangements disclosed herein may be used to suspend any desired item or items from a ceiling, directly by way of a load-bearing connector 40 or indirectly e.g. by way of an accessory 50 that is attached to a load-bearing connector 40. By way of a specific example, a load-bearing connector 40 (or, an accessory 50) might take the general form of a hook or hanger, whether light-duty (e.g. so that a lightweight plant or decorative item may be suspended therefrom) or for heavy duty (e.g. so that a heavy item such as a heavy plant, a bicycle, etc., may be suspended therefrom).

Devices (referred to herein in general as "anchors") comprising curved prongs in various configurations have found use for mounting items on walls, as is well known to artisans in the area. Such uses customarily involve mounting the anchor on a wall in a vertical configuration such that a load that results from the mass of an item that is supported by the anchor, is applied to the anchor primarily in shear. That is, the mass of the object produces a force vector that is generally parallel to the wall and that is generally parallel to a base plate (if present) of the anchor. Such anchors, in particular the curved prongs thereof, are customarily configured to oppose, and resist, such shear forces.

The present disclosure reveals that anchors can be configured and arranged so that when such an anchor is installed on a ceiling rather than on a wall and is used to resist and oppose a normal force (from a suspended item) rather than a shear force, the anchor can surprisingly withstand a load, e.g. at least 40, 60 or even 80 pounds (≈ 178, 267 and 356 N), as evidenced in the Examples presented herein. According to the invention this can be facilitated by providing that a load-bearing connector via which an item is connected to the anchor, is attached to the base plate of the anchor rather than to one or more of the insert plates of the item. The exemplary design shown in Figs. 1-3 provides a representative example of such an arrangement.

In pursuit of this, it can be helpful to arrange an anchor and the item to be supported by the anchor so that a load that is applied to the anchor as a result of the mass of the supported item produces a force vector that does not tend to cause the curved prongs of the insert plates to retreat downward along their arcuate prong-penetration paths. In other words, the applied load should not cause the curved prongs to work their way loose from the ceiling by backing out of the ceiling along their prong-penetration paths.

A first approach that can help to achieve such a goal is to provide that the item that is to be supported is connected to the base plate (whether e.g. by direct attachment to a connector 40 that is in turn attached to the base plate, or indirectly by way of an accessory that is attached to the connector) in such a manner as to provide that the load that is applied to the base plate as a result of the mass of the item, produces a force vector that is at least generally aligned with the normal axis of the base plate. Such a circumstance is illustrated in generic representation in Fig. 3, in which force vector F is aligned with the normal axis N of the base plate 2, this normal axis N of the base plate being aligned with the vertical axis V. By at least generally aligned is meant within plus or minus 20 degrees. In some embodiments, the thus-produced force vector may be at least substantially aligned with the normal axis of the base plate, meaning aligned within plus or minus 10 degrees. In some embodiments, the force vector may be at least essentially aligned with the normal axis of the base plate, meaning aligned within plus or minus 5 degrees. According to the invention, such arrangements are facilitated by configuring a load-bearing connector 40 so that it extends at least generally downward from a base plate 2, at least substantially downward from the base plate, or at least essentially downward from the base plate. (These terms have been defined earlier herein and it is again noted that such characterizations are applied with the anchor installed on a ceiling.)

The particular design depicted in Fig. 3 is an exemplary, representative arrangement in which a connector 40 extends at least essentially downward from a base plate 2, and with the supported item 60 being arranged in conjunction with connector 40 so that the resulting force vector F is "exactly" aligned with the normal axis N of the base plate. It will be understood that even an "exact" alignment may still vary within a few (e.g. plus or minus 1 or 2) degrees. Arrangements as described above can provide that the force vector F that results from the mass of the supported item does not align too closely with any of the prong-penetration pathways and thus does not tend to cause the curved prongs to work their way back out of the ceiling along these pathways so as to become dislodged from the ceiling. The arrangements disclosed herein may also advantageously cause the pairs of curved prongs to work against each other, in the sense that a force vector that is oriented so that it might tend to cause one pair of curved prongs of one insert plate to retreat backwards along their prong-penetration pathway, is oriented so that the second pair of curved prongs of the other insert plate strongly resists the force vector and thus minimizes any chance of the first pair of curved prongs retreating so as to become dislodged.

Another approach that can enhance the ability to achieve the above-discussed advantageous conditions is to provide that the force-transmission pathway that bears the load of the support item passes through a longitudinally central portion of the base plate. Such arrangements may provide that the force vector that results from the mass of the supported item does not align too closely with any of the prong-penetration pathways and thus does not tend to cause the curved prongs to work their way back out of the ceiling along these pathways. Thus in some embodiments a connector or connectors 40 of a base plate 2 may extend from a longitudinally central portion of the base plate or from a longitudinally centermost portion of the base plate, or may extend essentially from the longitudinal center of the base plate (these terms having been defined earlier herein).

The above-presented arrangements achieve a condition in which a load-bearing pathway passes through the base plate 2 of an anchor rather than through the insert plates of the anchor, so that no dislodging force is applied directly to the insert plates. This can be advantageous in some embodiments (however, it may not be necessary in all embodiments, as discussed later herein with reference to the Working Example - Variation). The base plate, insert plates and connector are also arranged so that the force vector F that results from the support of an item, is not applied to the base plate in a manner (e.g., is not applied near a longitudinal end of the base plate) that would cause a torque or moment so as to cause the base plate to exert a dislodging force on the insert plates. In other words, such arrangements minimize any force that might cause one or more curved prongs of insert plates of the anchor to retreat along their arcuate prong-penetration pathways. Such arrangements have been found to allow an anchor to withstand a force of over 20 pounds (≈ 89 N), in fact up to 40, 60 or even 80 pounds (≈ 178, 267 and 356 N) (when the anchor is mounted on a conventional sheet rock slab of the type used in residential ceilings), as evidenced in the Examples herein.

As further evidence of the efficacy of the above-presented arrangements, a Comparative Example was performed with a similarly-configured anchor (with a base plate and with two insert plates with curved prongs arranged in a converging/spreading manner) that was similarly mounted in sheet rock. As discussed in the Examples later herein, the Comparative Example anchor was of the design depicted in Figs. 14-17 of U.S. Patent Application Publication 2021/0298497 and was similarly sized and made of similar materials as the Working Example anchor. The load was applied to a longitudinally centermost portion of the anchor and was applied along the normal axis of the anchor and its base plate.

The primary difference was that in the Comparative Example, the connector did not extend from the base plate. Rather, in the Comparative Example, the connector was collectively provided by first and second tabs at the prong-bearing ends of the insert plates. (That is, by tabs 470 as most easily seen in Fig. 17 of the '497 publication.) When a normal load was applied to this insert-plate-attached connector, the anchor could not withstand up to 20 pounds of force without failing. Rather, the curved prongs worked loose from their arcuate prong-penetration pathways so that the insert plates, and the anchor as a whole, were dislodged from the sheet rock before the 20 pound threshold was reached.

In contrast, the inventive arrangements disclosed herein bore a load of over 40, 60, and even 80 pounds (≈ 178, 267 and 356 N) without becoming dislodged, as discussed in detail in the Examples herein. It is further noted that even when eventual failure was reached, it typically resulted from the sheet rock itself locally failing rather than the curved prongs backing out of the sheet rock along their arcuate prong-penetration pathways.

Discussions so far have concerned embodiments in which insert plates 20 are permanently connected to base plate 2, e.g. by way of hinge-posts 24 of the insert plates being permanently seated into orifices 11 of hinge-guides 9 or 10 of base plate 2 so that the insert plates are not disconnectable from the base plate. However, this need not necessarily be the case. Thus in some embodiments, insert plates 20 and base plate 2 may be provided e.g. in the form of a kit in which the insert plates are not permanently connected to the base plate. In such cases, the insert plates may nevertheless be manipulated (e.g. pivotally moved about an axis of rotation) so that curved prongs of the insert plates are penetrated into a ceiling so as to pin a base plate (which may have been "tacked" to the ceiling via straight spikes and/or a layer of adhesive in the manner as described earlier herein) to the ceiling. To facilitate this, in some embodiments a base plate 2 may be equipped with prong-insertion guides that allow the curved prongs to be properly positioned.

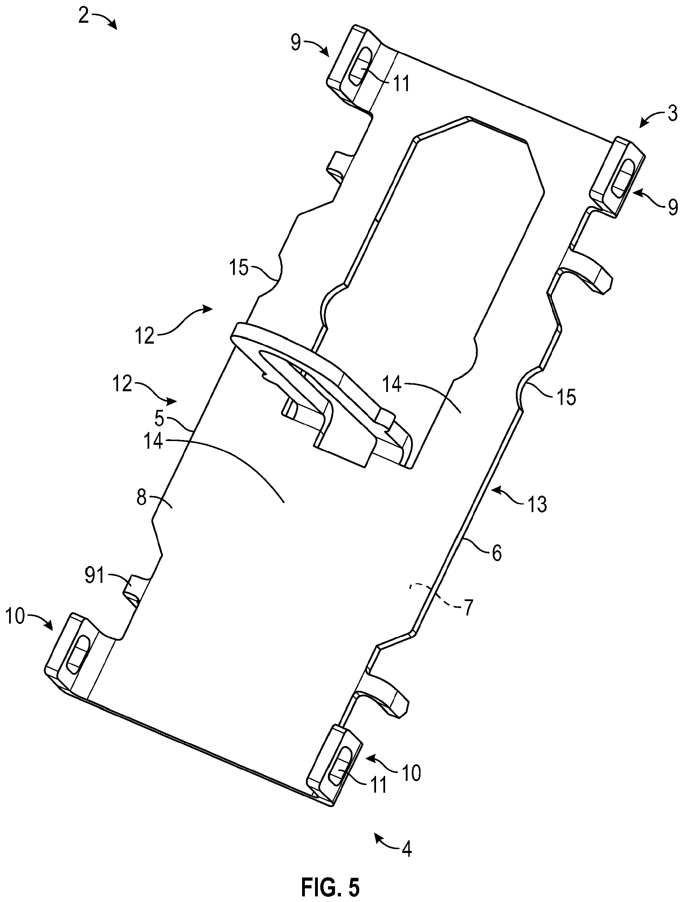

Thus for example, exemplary base plate 2 as depicted in Fig. 5 comprises prong-insertion guides in the form of through-apertures 15. Any such through-aperture may be configured (e.g., shaped, sized and positioned) to serve as a prong-insertion guide for a curved prong of an insert plate. The particular through-apertures 15 of Fig. 5 are in the form of transversely-outwardly-open-ended notches in the transverse edges 5 and 6 of the base plate. In other embodiments, the through-apertures may take the form of completely bounded through-orifices. In some embodiments, such prong-insertion guides, regardless of their particular shape and form, may be located in a longitudinally central portion of the base plate, according to the terminology introduced earlier herein.

Whatever the particular design of the prong-insertion guides, an insert plate 20 can be positioned so that the ceiling-penetrating ends 32 of its curved prongs 23 are located in the respective prong-insertion guides of the base plate. Once the prongs are correctly positioned per the insertion guides, the insert plate can be pressed upward in the manner described previously herein to penetrate the curved prongs into the ceiling so as to attach the insert plate into the ceiling. This procedure can be performed for both insert plates thus pinning the base plate to the ceiling in the manner previously described.

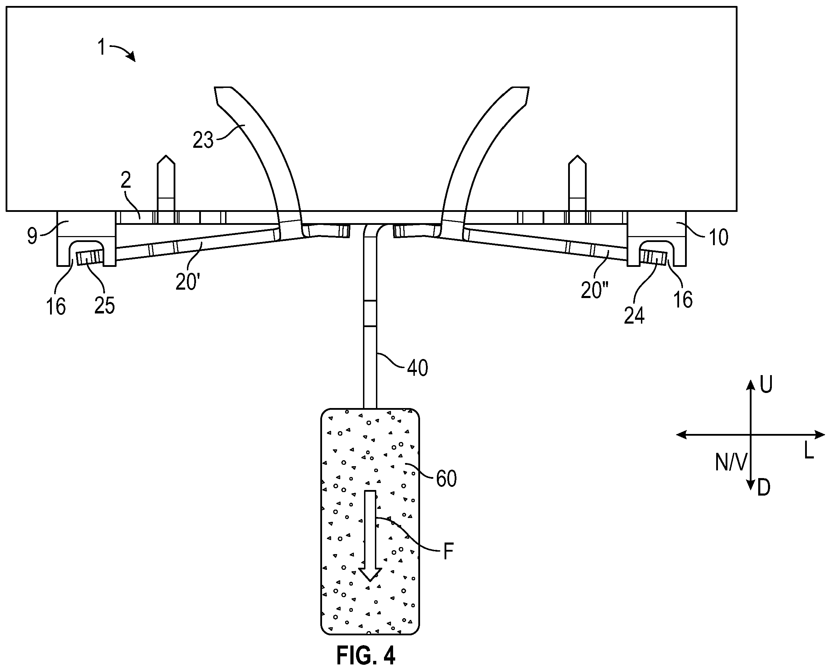

Another arrangement that allows similar functioning is depicted in Fig 4. In the exemplary design of Fig. 4, hinge-posts 24 of insert plates 20 are not all seated (e.g. permanently, at the factory) in bounded orifices 11 of hinge-guides 9 and 10 as in the previously-described design of Figs. 1-3. Rather, instead of bounded orifices 11, the hinge-guides are provided with open-ended notches 16 as visible in Fig. 4. (The particular notches 16 depicted in Fig. 4 are downwardly-open-ended, but other orientations are possible.) An insert plate can be held and positioned by a user so that its hinge-posts 24 are seated within these notches 16, and the insert plate can be rotated upward about a transverse axis of rotation aligned with the hinge-posts 24 and with the notches 16, in similar manner as described earlier herein. If desired, the base plate may also comprise prong-insertion guides to further assist in the manipulation of the insert plates.

All four hinge-guides need not necessarily comprise open-ended notches 16 in order to provide that the insert plates are not permanently connected to the base plate. Rather, in some embodiments, each pair of hinge-guides may include one hinge-guide that has e.g. an open-ended notch 16, with the other hinge-guide of the pair (specifically, a hinge-guide that is transversely opposite the notch-containing hinge guide) containing a bounded orifice 11. When the user is ready to install the anchor, one hinge-post 24 can be inserted into the bounded orifice 11 of one hinge-guide and the other hinge-post 24 can be moved into the open-ended notch 16 of the other hinge-guide. After this, the insert plate can be pivotally moved about a transverse axis of rotation that is aligned with the bounded orifice and the open-ended notch, to mount the insert plate to the ceiling. With any of these approaches, the insert plates may be pressed upward until the base plate is "pinned" by the insert plates, in similar manner as described earlier herein.

The above discussions reveal that in at least some embodiments, a permanent and/or strong connection between a hinge-guide of a base plate and a hinge-post of an insert plate may not be needed. Rather, in some embodiments a hinge-post may merely be positionable into an open-ended notch of a hinge-guide as described above. This realization opens various possibilities for temporarily or permanently pivotally connecting an insert plate to a base plate. For example, in some embodiments a hinge-guide may be provided by a molded plastic piece that is e.g. overmolded onto (or, is pre-made and friction-fit onto) a stub that extends downward from a base plate. The molded plastic hinge-guide may itself have an orifice or notch that allows a hinge-post of an insert plate to be seated therein. Such approaches may simplify the process of manufacturing the base plate; the fact that the resulting connection between the insert plate and the base plate may not be as strong as it would be if all the components were made of metal, may not significantly affect the functioning of the anchor.

The insights gained from the present investigations have allowed the exploration of other not claimed anchor arrangements that can allow items to be suspended from a ceiling. For example, the generalized precepts that an anchor can be configured so that a load that is applied to the anchor as a result of the mass of the item produces a force vector that is at least generally aligned with a normal axis of the anchor, and/or that an item can be connected to an anchor at a longitudinally central portion of the anchor, have been found to be applicable to at least some anchors that do not include a base plate as such. One such example is anchor 101 as depicted in exemplary embodiment in Fig. 8. Anchor 101 as presented herein is a modified version of the anchors depicted in Figs. 1-6 of U.S. Patent 10799025 and discussed in detail in the '025 patent (noting that the '025 patent does not discuss, or appear to entertain, the possibility that the anchors disclosed therein could be used in the manner disclosed in the present application, e.g. for suspending an item from a ceiling).

Exemplary anchor 101, as shown in Fig. 8 in side view, comprises first and second insert members 120' and 120" that are pivotally connected with each other. Specifically, their non-prong-bearing ends 122 are co-mounted on a common shaft (axle) 124 so that they share a common transverse axis of (partial) rotation 125. The anchor exhibits a readily discernable longitudinal axis L and transverse axis (T), with Fig. 8 being a side view looking along the transverse axis. Anchor 101 exhibits a normal axis N that is perpendicular to the longitudinal and transverse axes; when oriented in accordance with the herein-disclosed arrangements, this normal axis N of anchor 1 is aligned with the vertical axis V (and is perpendicular to the horizontal plane of ceiling 180).

Each insert member 120 and 120" comprises a pair of curved prongs 123 located generally at a prong-bearing end 121 of the insert member. First and second insert members 120' and 120" are pivotally movable relative to each other, about the above-noted transverse axis of rotation 125, between an open configuration and a closed (installed) configuration. Fig. 8 depicts insert members 120' and 120" (and anchor 101 as a whole) in the closed configuration as installed on the underside of a ceiling 180 with the curved prongs 123 having penetrated into the ceiling 180 along arcuate prong-penetration paths. The curved, downward-extending arrows in Fig. 8 thus represent the directions in which the insert members 120 can be pivotally moved about the common axis of rotation 125, from the depicted, closed/installed configuration into an open configuration. The curved prongs 123 of anchor 101 will be recognized as being in a converging, merging arrangement according to the terminology introduced previously.

First and second insert members 120' and 120" each comprise a pair of transversely-spaced struts 127 (only the nearest strut of each pair is easily seen in the viewing angle of Fig. 8) that extend to, and provide, the non-prong-bearing ends 122 of the member and that connect to the shaft 124 on which struts 127, and thus members 120, are co-mounted. Each strut 127 comprises an upward-facing surface 126; at least portions 131 of such surfaces 126 may be ceiling-contact surfaces that are in contact with lower surface 181 of ceiling 180 when curved prongs 123 are fully penetrated into ceiling 180. In some embodiments, the prong-bearing end 121 of each member may include a longitudinally-outward-extending portion 133 as shown in Fig. 8. Such a portion may e.g. serve as a fingerlift to allow the member to be pivotally moved downward (e.g. to initiate the detaching of the member from a ceiling) and/or may provide a ceiling-contact surface of the member.

Anchor 101 as modified for the purposes herein comprises a load-bearing connector. In some embodiments, such a load-bearing connector may be of the general type depicted in Fig. 8, that extends at least generally downward (in the depiction of Fig. 8, it extends essentially downward, with these terms having the same meaning as applied earlier herein) and that allows an item (not shown) to be connected directly or indirectly thereto. In some embodiments, connector 140 may extend from the above-described common shaft 124 of the anchor, e.g. by way of connector 140 being provided by a separately-made metal sheet, wire, rod, etc., a portion of which is wrapped over and around shaft 124. Other ways of interfacing a load-bearing connector with shaft 124 will be readily apparent. In some embodiments, a common shaft 124 can itself serve as a load-bearing connector, without having any other item or component attached to shaft 124 to serve as a load-bearing connector.

An item that is connected to load-bearing connector 140 can, by virtue of its mass, produce a force vector that is at least generally, substantially, or essentially aligned with the normal axis of anchor 101. Moreover, connector 140 is located in a longitudinally central portion of anchor 101 (the exemplary connector 140 as depicted in Fig. 8, as connected to a common shaft 124 as noted above, is very close to the longitudinal center of the anchor).

The discoveries outlined herein led to the hypothesis that an anchor 101 of the general type depicted in Fig. 8 and described above, while differing in some aspects from the inventive anchor 1 previously described herein (in particular, anchor 101 does not comprise a base plate as such), might nevertheless perform well when mounted to a ceiling and used to support an item. This was tested as outlined in the section of the Examples entitled Working Example - Variation. These initial experiments used a version of this type of anchor that did not have a connector 140 of the type depicted in Fig. 8. Also, in these initial experiments it was not found feasible to attach a supported item directly to the above-described common shaft 124 so that the common shaft could itself serve as a load-bearing connector. Nevertheless, proof of concept was demonstrated by attaching metal cords to the "wings" 128' and 128" of the insert members (as visible in Fig. 8), at locations as close as possible to the longitudinal center of the anchor. As reported in the Examples, an anchor of this general type was able to withstand a normally-applied force of over 20, 40, 60, and even 80 pounds (≈ 89, 178, 267 and 356 N). This being the case, anchors of the general type depicted in Fig. 8 and discussed above (in particular, anchors that do not necessarily include a base plate), are included within at least some aspects of the present disclosure, although not being claimed.

Discussions so far have concerned embodiments in which an anchor is mounted on the underside of a ceiling so that an item can be suspended therefrom. It will be appreciated that the precepts disclosed herein, e.g. regarding the advantages that can result from providing that a load is applied so as to produce a force vector that is at least generally aligned with the normal axis of an anchor (e.g., of the anchor's base plate), can be applied to other positional configurations. For example, in some embodiments an anchor may be mounted e.g. on an at least generally vertical wall, with a base plate of the anchor being oriented with its longitudinal axis vertical and with its normal axis horizontal. If an elongate member (e.g. a cord, rope, line, cable, etc.) is attached to a connector of a base plate of the anchor, and the elongate member is held under sufficient tension, the force that results from the tension on the elongate member may produce a force vector that is generally horizontal and thus is at least generally aligned with the normal axis of the base plate. Such a situation may arise, for example, in the case of a clothesline whose ends are connected to anchors that are mounted on vertical walls, with the clothesline being held under sufficient tension. It is thus noted that in some embodiments, an anchor of the general type disclosed herein may find use other than in ceiling-mounted situations. Such non-vertical uses are not necessarily limited to purely horizontal orientations. Rather, as long as the anchor and the item to be supported are arranged so that a resulting force vector is at least generally aligned with a normal axis of the base plate of the anchor, the precepts disclosed herein may be relied on.

### Examples

### Working Example

A Working Example prototype anchor was made of the type depicted in Figs. 1-3. The base plate was made by obtaining a piece of sheet steel (nominal thickness approximately 1.3 mm) and cutting and bending to form hinge-guides with orifices, a connector, and straight spikes. The resulting base plate was thus an integral structure comprising these components. The base plate was 6.0 cm long and 2.5 cm wide. The connector extended 2.7 cm from a longitudinally centermost portion of the base plate, along the normal axis of the base plate. Two identical insert plates were made by similar metal-forming methods, each insert plate similarly made from 1 mm sheet steel and including two integral, transversely-spaced curved prongs at a prong-bearing end of the insert plate and including two opposing, transversely-spaced and transversely-outwardly-facing hinge-posts at the opposing, non-prong-bearing end of the insert plate. Each insert plate was approximately 2.5 cm long by 2.5 cm wide, with the curved prongs extending outward approximately 1.5 cm from the insert plate. The hinge-posts of the insert plates were seated in the orifices of the hinge-guides of the base plate to produce an anchor of the general design depicted in Figs. 1-3.

Sheet rock was obtained at nominal 5/8 inch (16 mm) thickness. A prototype anchor was installed into the sheet rock in the manner described earlier herein. The base plate of the anchor was tacked to the sheet rock by way of the straight spikes of the base plate, after which the insert plates of the anchor were pivotally moved about transverse axes of rotation aligned with the hinge-posts and with seating orifices of the hinge-guides, so as to penetrate the curved prongs into the sheet rock. The curved prongs were fully penetrated until the anchor was fully installed on the sheet rock in the general manner depicted in Fig. 3. No locking mechanism of any type was present.

A piece of the sheet rock, of size approximately 8 cm by 10 cm and with the prototype anchor mounted on the center of the piece, was installed in a frame that supported the sheet rock around the edges. The frame was inserted into the stationary fixture of an Instron-type mechanical testing apparatus. One end of a metal cord was attached to the connector. The other end of the metal cord was attached to the movable fixture of the mechanical testing apparatus, in a configuration in which force exerted on the metal cord by the testing apparatus was applied in a direction aligned with the normal axis of the base plate of the anchor, and was applied to the base plate via the connector that was located in the longitudinally centermost portion of the base plate and that extended from the base plate in a direction aligned with the normal axis of the base plate. In this testing apparatus, the stationary fixture was beneath the movable fixture, so the prototype anchor was face-up on the sheet rock with the metal cord extending upward therefrom. In other words, in these tests, the anchor was "upside down" from how it would be oriented when mounted to the underside of a ceiling; however, this was not considered to affect the test results.

A Working Example prototype anchor tested in this manner was able to withstand over 80 pounds (over ≈ 356 N) of force, as applied by the testing apparatus, without failing (becoming dislodged from the sheet rock). When failure did eventually occur (at a force well beyond 80 pounds (≈ 356 N)), it was typically by virtue of the sheet rock itself locally failing rather than as a result of the curved prongs retreating backwards along their arcuate prong-insertion pathways.

### Comparative Example

A Comparative Example prototype anchor was obtained of the design depicted in Figs. 14-17 of U.S. Patent Application Publication 2021/0298497. The Comparative Example prototype anchor was similarly sized and made of similar materials as the Working Example anchor (and was made via similar metal-forming methods), and was similarly mounted onto a piece of sheet rock. A metal cord was attached to a "connector" collectively provided by first and second tabs at the prong-bearing ends of the insert plates. (That is, tabs 470 as most easily seen in Fig. 17 of the '497 publication.)

The load was thus applied to a longitudinally centermost portion of the anchor and was applied along the normal axis of the anchor and its baseplate; however, the load was applied to the prong-bearing ends of the insert plates rather than to the base plate.

A Comparative Example prototype anchor tested in the manner described above failed (became dislodged from the sheet rock due to the curved prongs becoming dislodged from the sheet rock) at less than 20 pounds (≈ 89 N) applied force.

### Working Example - Not Claimed Variation

A prototype anchor was obtained of the general type depicted in Fig. 8 herein (except lacking a connector 140 as shown in Fig. 8). The anchor was of the specific type depicted in Figs. 1-6 of U.S. Patent 10799025 and discussed in detail in the '025 patent. Anchors of this type are available from Hillman Corporation, e.g. as part of the products available under the trade designation HIGH & MIGHTY HOOK RAIL.

The prototype anchor was mounted on sheet rock by positioning the anchor on the sheet rock and applying pressure to the prong-bearing ends of the insert members until the curved prongs were fully penetrated into the sheet rock. The anchor, as mounted on the sheet rock, was then tested in similar manner as described above. In order to reproduce a configuration in which an item was supported via a connector located as close to the longitudinal center of the anchor as possible, first and second metal cords were connected to longitudinally inwardmost locations of "wings" 128' and 128". (These "wings" 128 are visible in Fig. 8; in ordinary use of this type of anchor according to the manufacturer's instructions, these "wings" are used to accept a special mating component of a "rail" (e.g. a base of a coat rack, towel rack, or the like) that is to be connected to the anchor.) It was estimated that connecting the metal cords to the longitudinally inwardmost locations of these "wings" resulted in a force being applied in a location that was at or within a longitudinally central portion of the anchor, according to the terminology introduced earlier herein. It was thus observed that in this testing, the load was applied to a longitudinally central portion of the anchor and was applied at least generally along the normal axis of the anchor.

A prototype anchor tested in this manner was able to withstand over 80 pounds (over ≈ 356 N) of force, as applied by the testing apparatus, without failing (becoming dislodged from the sheet rock).

The tests and test results described above are intended solely to be illustrative, rather than predictive, and variations in the testing procedure can be expected to yield different results. All quantitative values in the Examples section are understood to be approximate in view of the commonly known tolerances involved in the procedures used. The foregoing detailed description and examples have been given for clarity of understanding only. No unnecessary limitations are to be understood therefrom.

It will be apparent to those skilled in the art that the specific exemplary embodiments, elements, structures, features, details, arrangements, configurations, etc., that are disclosed herein can be modified and/or combined in numerous ways. It is emphasized that any embodiment disclosed herein may be used in combination with any other compatible embodiment or embodiments disclosed herein. While a limited number of exemplary combinations are presented herein, it is emphasized that all such combinations are envisioned and are only prohibited in the specific instance of a combination that is incompatible.

In summary, numerous variations and combinations are contemplated as being within the bounds of the conceived invention, not merely those representative designs that were chosen to serve as exemplary illustrations. Thus, the scope of the present invention should not be limited to the specific illustrative structures described herein, but rather extends to the structures described by the language of the appended claims.

## Claims

1. A method of suspending an item from a ceiling using a base plate (2) and first and second prong-bearing insert plates (20', 20"), the method comprising:
positioning the base plate (2) at a desired location underneath the ceiling and holding the base plate (2) against the ceiling so that an upward major surface (7) of the base plate (2) closely abuts the ceiling and so that a longitudinal axis (L) and a transverse axis (T) of the base plate (2) are oriented at least substantially parallel to the ceiling and a normal axis (N) of the base plate (2) is oriented at least substantially perpendicular to the ceiling;
then,
urging a prong-bearing longitudinal end (21) of the first insert plate (20') upward so that curved prongs (23) of the first insert plate (20') penetrate upward into the ceiling along arcuate penetration paths so that the first insert plate (20') is attached to the ceiling by way of the prongs (23); and, urging a prong-bearing longitudinal end (21) of the second insert plate (20") upward so that curved prongs (23) of the second insert plate (20") penetrate upward into the ceiling along arcuate penetration paths, so that the second insert plate (20") is attached to the ceiling by way of the prongs (23), with the first and second insert plates (20', 20"), as attached to the ceiling, collectively pinning the base plate (2) against the ceiling;
then,
connecting the item to at least one load-bearing connector (40) that extends at least generally downward from the base plate (2) so that a load that is applied to the base plate (2) as a result of the mass of the item produces a force vector that is at least generally aligned with the normal axis (N) of the base plate (2).

2. The method of claim 1 wherein the first insert plate (20') comprises two curved prongs (23) that extend integrally from opposing transverse edges of the prong-bearing longitudinal end (21) of the first insert plate (20') and wherein the second insert plate (20") comprises two curved prongs (23) that extend integrally from opposing transverse edges of the prong-bearing longitudinal end (21) of the second insert plate (20"), the first and second insert plates (20', 20") and their curved prongs (23) being configured so that when the curved prongs (23) penetrate upward into the ceiling along their arcuate penetration paths, the curved prongs (23) of the first and second insert plates (20', 20") are in a converging, spreading arrangement.

3. The method of claim 1 wherein the at least one load-bearing connector (40) extends at least generally downward from a longitudinally central portion of the base plate (2).

4. The method of claim 1 wherein the at least one load-bearing connector (40) extends at least generally downward from a longitudinally centermost portion of the base plate (2).

5. The method of claim 1 wherein the at least one load-bearing connector (40) extends at least substantially downward from the base plate (2) so that a load that is applied to the base plate (2) as a result of the mass of the item produces a force vector that is at least substantially aligned with the normal axis (N) of the base plate (2).

6. The method of claim 1 wherein the first insert plate (20') and second insert plates (20") are permanently connected to the base plate (2).

7. The method of claim 6 wherein the first insert plate (20') is permanently, pivotally connected to a first longitudinal end of the base plate (2) by way of a first pair of hinge-posts at a non-prong-bearing end of the first insert plate being seated into orifices of a first pair of hinge-guides that extend generally downward from transverse edges of the first longitudinal end of the base plate (2); and, wherein the second insert plate (20") is permanently, pivotally connected to a second, opposing longitudinal end of the base plate (2) by way of a second pair of hinge-posts at a non-prong-bea ring end of the second insert plate being seated into orifices of a second pair of hinge-guides that extend generally downward from transverse edges of the second, opposing longitudinal end of the base plate (2); so that the prong-bea ring end (21) of the first insert plate (20') is urgable upward by way of the first insert plate (20') being pivoted about a transverse axis of rotation that is aligned with the first pair of hinge-posts of the first insert plate and that is aligned with the orifices of the first pair of hinge-guides of the base plate (2), and so that the prong-bea ring end (21) of the second insert plate (20") is urgable upward by way of the second insert plate (20") being pivoted about a transverse axis of rotation that is aligned with the second pair of hinge-posts of the second insert plate and that is aligned with the orifices of the second pair of hinge-guides of the base plate (2).

8. The method of claim 1 wherein the first and second insert plates (20', 20") are not permanently connected to the base plate (2).

9. The method of claim 8 wherein transverse edges of an interior portion of the base plate (2) each comprise through-openings, each through-opening being configured to serve as an insertion guide for a curved prong (23) of an insert plate (20', 20").

10. The method of claim 8 wherein the base plate (2) comprises a first pair of hinge-guides that extend generally downward from transverse edges of the first longitudinal end of the base plate (2) and a second pair of hinge-guides that extend generally downward from transverse edges of the second longitudinal end of the base plate (2), at least one hinge-guide of each pair of hinge-guides comprising an open-ended notch; and, wherein the first insert plate (20') comprises a first pair of hinge-posts at a non-prong-bea ring end of the first insert plate, at least one hinge-post of the first pair of hinge-posts being upwardly removably seatable into an open-ended notch of a hinge-guide of the first pair of hinge-guides to position the first insert plate (20') in a position in which the prong-bearing end (21) of the first insert plate can be urged upward by way of the first insert plate being pivoted about a transverse axis of rotation that is aligned with the first pair of hinge-posts of the first insert plate and that is aligned with the open-ended notch of the hinge-guide of the first pair of hinge-guides; and, wherein the second insert plate (20") comprises a second pair of hinge-posts at a non-prong-bearing end of the second insert plate, at least one hinge-post of the second pair of hinge-posts being upwardly removably seatable into the open-ended notch of the hinge-guide of the second pair of hinge-guides to position the second insert plate (20") in a position in which the prong-bearing end (21) of the second insert plate can be urged upward by way of the second insert plate being pivoted about a transverse axis of rotation that is aligned with the second pair of hinge-posts of the second insert plate and that is aligned with the open-ended notch of the hinge-guide of the second pair of hinge-guides.

11. The method of claim 1 wherein the item to be suspended from the ceiling is connected directly to the at least one load-bearing connector (40) of the base plate (2).

12. The method of claim 1 wherein the item to be suspended from the ceiling is connected to an accessory that is connected to the at least one load-bea ring connector (40) of the base plate (2).

13. The method of claim 1 further comprising attaching a decorative cover to the at least one load-bea ring connector (40) of the base plate (2), the decorative cover being configured to downwardly cover the entirety of the base plate (2) and the entirety of the first and second insert plates (20', 20"), with the decorative cover comprising a through-hole through which the at least one connector (40) of the base plate (2) downwardly extends, and wherein the decorative cover is attached to the at least one connector (40) of the base plate (2) before the item to be suspended from the ceiling is connected to the at least one connector (40) of the base plate (2).

14. The method of claim 1 wherein the base plate (2) comprises at least two straight spikes (91) that extend at least essentially upward from the base plate (2), and wherein the method includes a step of urging the base plate (2) upward against the ceiling so that the straight spikes (91) penetrate into the ceiling along linear penetration paths to hold the base plate (2) against the ceiling so that an upward major surface (7) of the base plate (2) closely abuts the ceiling.

15. The method of claim 1 wherein a layer of pressure-sensitive adhesive (92) is present on an upward major surface (7) of the base plate (2) and wherein the method includes a step of urging the base plate (2) upward toward the ceiling so that the layer of pressure-sensitive adhesive (92) contacts the ceiling and adhesively bonds the upward major surface (7) of the base plate (2) to the ceiling to hold the base plate (2) against the ceiling so that an upward major surface (7) of the base plate (2) closely abuts the ceiling.

## Patentansprüche

1. Ein Verfahren zum Abhängen eines Gegenstands von einer Decke unter Verwendung einer Basisplatte (2) und einer ersten und einer zweiten zinkentragenden Einsatzplatte (20', 20"), das Verfahren aufweisend:
Positionieren der Basisplatte (2) an einer gewünschten Stelle unter der Decke und Halten der Basisplatte (2) gegen die Decke, sodass eine nach oben gerichtete Hauptoberfläche (7) der Basisplatte (2) eng an der Decke anliegt und sodass eine Längsachse (L) und eine Querachse (T) der Basisplatte (2) mindestens im Wesentlichen parallel zu der Decke ausgerichtet sind und eine Hochachse (N) der Basisplatte (2) mindestens im Wesentlichen senkrecht zu der Decke ausgerichtet ist;
dann,
Drängen eines zinkentragenden Längsendes (21) der ersten Einsatzplatte (20') nach oben gerichtet, sodass gekrümmte Zinken (23) der ersten Einsatzplatte (20') nach oben gerichtet in die Decke entlang bogenförmiger Eindringwege eindringen, sodass die erste Einsatzplatte (20') an der Decke mittels der Zinken (23) angebracht wird; und Drängen eines zinkentragenden Längsendes (21) der zweiten Einsatzplatte (20") nach oben gerichtet, sodass gekrümmte Zinken (23) der zweiten Einsatzplatte (20") nach oben gerichtet in die Decke entlang bogenförmiger Eindringwege eindringen, sodass die zweite Einsatzplatte (20") an der Decke mittels der Zinken (23) angebracht wird, wobei die erste und die zweite Einsatzplatte (20', 20") wenn sie an der Decke angebracht sind, gemeinsam die Basisplatte (2) an der Decke anheften;
dann,
Verbinden des Gegenstands mit mindestens einem lasttragenden Verbinder (40), der sich von der Basisplatte (2) mindestens im Allgemeinen nach unten gerichtet erstreckt, sodass eine Last, die auf die Basisplatte (2) als Ergebnis der Masse des Gegenstands ausgeübt wird, einen Kraftvektor erzeugt, der mindestens im Allgemeinen mit der Hochachse (N) der Basisplatte (2) ausgerichtet ist.

2. Das Verfahren nach Anspruch 1, wobei die erste Einsatzplatte (20') zwei gekrümmte Zinken (23) aufweist, die sich einstückig von gegenüberliegenden Querkanten des zinkentragenden Längsendes (21) der ersten Einsatzplatte (20') erstrecken, und wobei die zweite Einsatzplatte (20") zwei gekrümmte Zinken (23) aufweist, die sich einstückig von gegenüberliegenden Querkanten des zinkentragenden Längsendes (21) der zweiten Einsatzplatte (20") erstrecken, wobei die erste und die zweite Einsatzplatte (20', 20") und deren gekrümmte Zinken (23) konfiguriert sind, sodass, wenn die gekrümmten Zinken (23) nach oben gerichtet in die Decke entlang ihrer bogenförmigen Eindringwege eindringen, die gekrümmten Zinken (23) der ersten und der zweiten Einsatzplatte (20', 20") in einer konvergierenden, spreizenden Anordnung sind.

3. Das Verfahren nach Anspruch 1, wobei sich der mindestens eine lasttragende Verbinder (40) mindestens im Allgemeinen nach unten gerichtet von einer Längsrichtung des Mittelteils der Basisplatte (2) erstreckt.

4. Das Verfahren nach Anspruch 1, wobei sich der mindestens eine lasttragende Verbinder (40) mindestens im Allgemeinen nach unten gerichtet von einer Längsrichtung der Mitte des Mittelteils der Basisplatte (2) erstreckt.

5. Das Verfahren nach Anspruch 1, wobei sich der mindestens eine lasttragende Verbinder (40) mindestens im Wesentlichen nach unten gerichtet von der Basisplatte (2) erstreckt, sodass eine Last, die auf die Basisplatte (2) als Ergebnis der Masse des Gegenstands ausgeübt wird, einen Kraftvektor erzeugt, der mindestens im Wesentlichen mit der Hochachse (N) der Basisplatte (2) ausgerichtet ist.

6. Das Verfahren nach Anspruch 1, wobei die erste Einsatzplatte (20') und zweite Einsatzplatten (20'') dauerhaft mit der Basisplatte (2) verbunden sind.

7. Das Verfahren nach Anspruch 6, wobei die erste Einsatzplatte (20') dauerhaft, schwenkbar mit einem ersten Längsende der Basisplatte (2) verbunden ist, indem ein erstes Paar von Scharnierzapfen an einem nicht-zinkentragenden Ende der ersten Einsatzplatte in Öffnungen eines ersten Paares von Scharnierführungen eingesetzt ist, die sich im Allgemeinen nach unten gerichtet von Querkanten des ersten Längsendes der Basisplatte (2) erstrecken; und wobei die zweite Einsatzplatte (20") dauerhaft, schwenkbar mit einem zweiten, gegenüberliegenden Längsende der Basisplatte (2) verbunden ist, indem ein zweites Paar von Scharnierzapfen an einem nicht-zinkentragenden Ende der zweiten Einsatzplatte in Öffnungen eines zweiten Paares von Scharnierführungen eingesetzt ist, die sich im Allgemeinen nach unten gerichtet von Querkanten des zweiten, gegenüberliegenden Längsendes der Basisplatte (2) erstrecken; sodass das zinkentragende Ende (21) der ersten Einsatzplatte (20') nach oben gerichtet drängbar sind, indem die erste Einsatzplatte (20') um eine querverlaufende Drehachse geschwenkt wird, die mit dem ersten Paar von Scharnierzapfen der ersten Einsatzplatte ausgerichtet ist, und die mit den Öffnungen des ersten Paares von Scharnierführungen der Basisplatte (2) ausgerichtet ist, und sodass das zinkentragende Ende (21) der zweiten Einsatzplatte (20") nach oben gerichtet drängbar ist, indem die zweite Einsatzplatte (20") um eine querverlaufende Drehachse geschwenkt wird, die mit dem zweiten Paar von Scharnierzapfen der zweiten Einsatzplatte ausgerichtet ist, und die mit den Öffnungen des zweiten Paares von Scharnierführungen der Basisplatte (2) ausgerichtet ist.

8. Das Verfahren nach Anspruch 1, wobei die erste und die zweite Einsatzplatte (20', 20") mit der Basisplatte (2) nicht dauerhaft verbunden sind.

9. Das Verfahren nach Anspruch 8, wobei Querkanten eines inneren Abschnitts der Basisplatte (2) jeweils Durchgangsöffnungen aufweisen, wobei jede Durchgangsöffnung konfiguriert ist, um als Einführungsführung für einen gekrümmten Zinken (23) einer Einsatzplatte (20', 20") zu dienen.

10. Das Verfahren nach Anspruch 8, wobei die Basisplatte (2) ein erstes Paar von Scharnierführungen, die sich im Allgemeinen nach unten gerichtet von Querkanten des ersten Längsendes der Basisplatte (2) erstrecken, und ein zweites Paar von Scharnierführungen, die sich im Allgemeinen nach unten gerichtet von Querkanten des zweiten Längsendes der Basisplatte (2) erstrecken, aufweist, wobei mindestens eine Scharnierführung jedes Paares von Scharnierführungen eine offenendige Kerbe aufweist; und wobei die erste Einsatzplatte (20') ein erstes Paar von Scharnierzapfen an einem nicht-zinkentragenden Ende der ersten Einsatzplatte aufweist, wobei mindestens ein Scharnierzapfen des ersten Paares von Scharnierzapfen nach oben gerichtet entfernbar in eine offenendigen Kerbe einer Scharnierführung des ersten Paares von Scharnierführungen einsetzbar ist, um die erste Einsatzplatte (20') in einer Position zu positionieren, in der das zinkentragende Ende (21) der ersten Einsatzplatte nach oben gerichtet drängbar ist, indem die erste Einsatzplatte um eine querverlaufende Drehachse geschwenkt wird, die mit dem ersten Paar von Scharnierzapfen der ersten Einsatzplatte ausgerichtet ist und die mit der offenendigen Kerbe der Scharnierführung des ersten Paares von Scharnierführungen ausgerichtet ist; und wobei die zweite Einsatzplatte (20") ein zweites Paar von Scharnierzapfen an einem nicht-zinkentragenden Ende der zweiten Einsatzplatte aufweist, wobei mindestens ein Scharnierzapfen des zweiten Paares von Scharnierzapfen nach oben gerichtet entfernbar in die offenendige Kerbe der Scharnierführung des zweiten Paares von Scharnierführungen einsetzbar ist, um die zweite Einsatzplatte (20") in einer Position zu positionieren, in der das zinkentragende Ende (21) der zweiten Einsatzplatte nach oben gerichtet drängbar ist, indem die zweite Einsatzplatte um eine querverlaufende Drehachse geschwenkt wird, die mit dem zweiten Paar von Scharnierzapfen der zweiten Einsatzplatte ausgerichtet ist und die mit der offenendigen Kerbe der Scharnierführung des zweiten Paares von Scharnierführungen ausgerichtet ist.

11. Das Verfahren nach Anspruch 1, wobei der von der Decke abzuhängende Gegenstand direkt mit dem mindestens einen lasttragenden Verbinder (40) der Basisplatte (2) verbunden ist.

12. Das Verfahren nach Anspruch 1, wobei der von der Decke abzuhängende Gegenstand mit einem Zubehörteil verbunden ist, das mit dem mindestens einen lasttragenden Verbinder (40) der Basisplatte (2) verbunden ist.

13. Das Verfahren nach Anspruch 1, ferner aufweisend das Anbringen einer dekorativen Abdeckung an dem mindestens einen lasttragenden Verbinder (40) der Basisplatte (2), wobei die dekorative Abdeckung konfiguriert ist, um die Gesamtheit der Basisplatte (2) und die Gesamtheit der ersten und der zweiten Einsatzplatte (20', 20") nach unten gerichtet abzudecken, wobei die dekorative Abdeckung ein Durchgangsloch, durch das sich der mindestens eine Verbinder (40) der Basisplatte (2) nach unten gerichtet erstreckt, und wobei die dekorative Abdeckung an dem mindestens einen Verbinder (40) der Basisplatte (2) angebracht wird, bevor der von der Decke abzuhängende Gegenstand mit dem mindestens einen Verbinder (40) der Basisplatte (2) verbunden wird.

14. Das Verfahren nach Anspruch 1, wobei die Basisplatte (2) mindestens zwei gerade Dornen (91) aufweist, die sich mindestens im Wesentlichen nach oben gerichtet von der Basisplatte (2) erstrecken, und wobei das Verfahren einen Schritt des Drängens der Basisplatte (2) nach oben gerichtet gegen die Decke einschließt, sodass die geraden Dornen (91) in die Decke entlang linearer Eindringwege eindringen, um die Basisplatte (2) an der Decke zu halten, sodass eine nach oben gerichtete Hauptoberfläche (7) der Basisplatte (2) eng an der Decke anliegt.

15. Das Verfahren nach Anspruch 1, wobei eine Schicht aus Haftkleber (92) auf einer nach oben gerichteten Hauptoberfläche (7) der Basisplatte (2) vorhanden ist und wobei das Verfahren einen Schritt des Drängens der Basisplatte (2) nach oben gerichtet zu der Decke hin einschließt, sodass die Schicht aus Haftkleber (92) die Decke kontaktiert und die nach oben gerichtete Hauptoberfläche (7) der Basisplatte (2) mit der Decke klebend verbindet, um die Basisplatte (2) an der Decke zu halten, sodass eine nach oben gerichtete Hauptoberfläche (7) der Basisplatte (2) eng an der Decke anliegt.

## Revendications

1. Procédé de suspension d'un article à un plafond à l'aide d'une plaque de base (2) et de première et seconde plaques d'insert (20', 20") portant des griffes, le procédé comprenant :
le positionnement de la plaque de base (2) au niveau d'une localisation souhaitée en dessous du plafond et le maintien de la plaque de base (2) contre le plafond de sorte qu'une surface principale vers le haut (7) de la plaque de base (2) vient étroitement en butée contre le plafond et de sorte qu'un axe longitudinal (L) et un axe transversal (T) de la plaque de base (2) sont orientés au moins sensiblement parallèles au plafond et qu'un axe normal (N) de la plaque de base (2) est orienté au moins sensiblement perpendiculaire au plafond ;
puis,
la poussée d'une extrémité longitudinale portant des griffes (21) de la première plaque d'insert (20') vers le haut de sorte que des griffes (23) incurvées de la première plaque d'insert (20') pénètrent vers le haut dans le plafond le long de chemins de pénétration arqués de sorte que la première plaque d'insert (20') est fixée au plafond au moyen des griffes (23) ; et, la poussée d'une extrémité longitudinale portant des griffes (21) de la seconde plaque d'insert (20") vers le haut de sorte que les griffes (23) incurvées de la seconde plaque d'insert (20") pénètrent vers le haut dans le plafond le long de chemins de pénétration arqués, de sorte que la seconde plaque d'insert (20") est fixée au plafond au moyen des griffes (23), avec les première et seconde plaques d'insert (20', 20"), telles que fixées au plafond, épinglant collectivement la plaque de base (2) contre le plafond ;
puis,
la liaison de l'article à au moins un élément de liaison (40) porteur de charge qui s'étend au moins généralement vers le bas à partir de la plaque de base (2) de sorte qu'une charge qui est appliquée à la plaque de base (2) en conséquence de la masse de l'article produit un vecteur de force qui est au moins généralement aligné avec l'axe normal (N) de la plaque de base (2).

2. Procédé selon la revendication 1 dans lequel la première plaque d'insert (20') comprend deux griffes (23) incurvées qui s'étendent de façon solidaire à partir de bords transversaux opposés de l'extrémité longitudinale portant des griffes (21) de la première plaque d'insert (20') et dans lequel la seconde plaque d'insert (20") comprend deux griffes (23) incurvées qui s'étendent de façon solidaire à partir de bords transversaux opposés de l'extrémité longitudinale portant des griffes (21) de la seconde plaque d'insert (20"), les première et seconde plaques d'insert (20', 20") et leurs griffes (23) incurvées étant conçues de sorte que lorsque les griffes (23) incurvées pénètrent vers le haut dans le plafond le long de leurs chemins de pénétration arqués, les griffes (23) incurvées des première et seconde plaques d'insert (20', 20") sont dans un agencement convergent, s'étalant.

3. Procédé selon la revendication 1 dans lequel l'au moins un élément de liaison (40) porteur de charge s'étend au moins généralement vers le bas à partir d'une partie longitudinalement centrale de la plaque de base (2).

4. Procédé selon la revendication 1 dans lequel l'au moins un élément de liaison (40) porteur de charge s'étend au moins généralement vers le bas à partir d'une partie longitudinalement la plus au centre de la plaque de base (2).

5. Procédé selon la revendication 1 dans lequel l'au moins un élément de liaison (40) porteur de charge s'étend au moins sensiblement vers le bas à partir de la plaque de base (2) de sorte qu'une charge qui est appliquée à la plaque de base (2) en conséquence de la masse de l'article produit un vecteur de force qui est au moins sensiblement aligné avec l'axe normal (N) de la plaque de base (2).

6. Procédé selon la revendication 1 dans lequel la première plaque d'insert (20') et des secondes plaques d'insert (20") sont reliées de manière permanente à la plaque de base (2).

7. Procédé selon la revendication 6 dans lequel la première plaque d'insert (20') est reliée en permanence de manière pivotante à une première extrémité longitudinale de la plaque de base (2) au moyen d'une première paire de montants d'articulation au niveau d'une extrémité ne portant pas de griffes de la première plaque d'insert étant logée dans des orifices d'une première paire de guides d'articulation qui s'étendent généralement vers le bas à partir de bords transversaux de la première extrémité longitudinale de la plaque de base (2) ; et, dans lequel la seconde plaque d'insert (20") est reliée en permanence de manière pivotante à une seconde extrémité longitudinale opposée de la plaque de base (2) au moyen d'une seconde paire de montants d'articulation au niveau d'une extrémité ne portant pas de griffes, de la seconde plaque d'insert étant logée dans des orifices d'une seconde paire de guides d'articulation qui s'étendent généralement vers le bas à partir de bords transversaux de la seconde extrémité longitudinale opposée de la plaque de base (2) ; de sorte que l'extrémité (21) portant des griffes de la première plaque d'insert (20') peut être poussée vers le haut au moyen de la première plaque d'insert (20') étant pivotée autour d'un axe transversal de rotation qui est aligné avec la première paire de montants d'articulation de la première plaque d'insert et qui est aligné avec les orifices de la première paire de guides d'articulation de la plaque de base (2), et de sorte que l'extrémité (21) portant des griffes de la seconde plaque d'insert (20") peut être poussée vers le haut au moyen de la seconde plaque d'insert (20") étant pivotée autour d'un axe transversal de rotation qui est aligné avec la seconde paire de montants d'articulation de la seconde plaque d'insert et qui est aligné avec les orifices de la seconde paire de guides d'articulation de la plaque de base (2).

8. Procédé selon la revendication 1 dans lequel les première et seconde plaques d'insert (20', 20") ne sont pas reliées de manière permanente à la plaque de base (2).

9. Procédé selon la revendication 8 dans lequel des bords transversaux d'une partie intérieure de la plaque de base (2) comprennent chacun des ouvertures traversantes, chaque ouverture traversante étant conçue pour servir de guide d'insertion pour une griffe (23) incurvée d'une plaque d'insert (20', 20").

10. Procédé selon la revendication 8 dans lequel la plaque de base (2) comprend une première paire de guides d'articulation qui s'étendent généralement vers le bas à partir de bords transversaux de la première extrémité longitudinale de la plaque de base (2) et une seconde paire de guides d'articulation qui s'étendent généralement vers le bas à partir de bords transversaux de la seconde extrémité longitudinale de la plaque de base (2), au moins un guide d'articulation de chaque paire de guides d'articulation comprenant une encoche à extrémité ouverte ; et, dans lequel la première plaque d'insert (20') comprend une première paire de montants d'articulation au niveau d'une extrémité ne portant pas de griffes de la première plaque d'insert, au moins un montant d'articulation de la première paire de montants d'articulation pouvant être logé de manière amovible vers le haut dans une encoche à extrémité ouverte d'un guide d'articulation de la première paire de guides d'articulation pour positionner la première plaque d'insert (20') dans une position dans laquelle l'extrémité (21) portant des griffes de la première plaque d'insert peut être poussée vers le haut au moyen de la première plaque d'insert étant pivotée autour d'un axe transversal de rotation qui est aligné avec la première paire de montants d'articulation de la première plaque d'insert et qui est aligné avec l'encoche à extrémité ouverte du guide d'articulation de la première paire de guides d'articulation ; et, dans lequel la seconde plaque d'insert (20") comprend une seconde paire de montants d'articulation au niveau d'une extrémité ne portant pas de griffes de la seconde plaque d'insert, au moins un montant d'articulation de la seconde paire de montants d'articulation pouvant être logé de manière amovible vers le haut dans l'encoche à extrémité ouverte du guide d'articulation de la seconde paire de guides d'articulation pour positionner la seconde plaque d'insert (20") dans une position dans laquelle l'extrémité (21) portant des griffes de la seconde plaque d'insert peut être poussée vers le haut au moyen de la seconde plaque d'insert étant pivotée autour d'un axe transversal de rotation qui est aligné avec la seconde paire de montants d'articulation de la seconde plaque d'insert et qui est aligné avec l'encoche à extrémité ouverte du guide d'articulation de la seconde paire de guides d'articulation.

11. Procédé selon la revendication 1 dans lequel l'article à suspendre au plafond est relié directement à l'au moins un élément de liaison (40) porteur de charge de la plaque de base (2).

12. Procédé selon la revendication 1 dans lequel l'article à suspendre au plafond est relié à un accessoire qui est relié à l'au moins un élément de liaison (40) porteur de charge de la plaque de base (2).

13. Procédé selon la revendication 1 comprenant en outre la fixation d'un recouvrement décoratif à l'au moins un élément de liaison (40) porteur de charge de la plaque de base (2), le recouvrement décoratif étant conçu pour couvrir vers le bas l'entièreté de la plaque de base (2) et l'entièreté des première et seconde plaques d'insert (20', 20"), le recouvrement décoratif comprenant un trou traversant à travers lequel l'au moins un élément de liaison (40) de la plaque de base (2) s'étend vers le bas, et dans lequel le recouvrement décoratif est fixé à l'au moins un élément de liaison (40) de la plaque de base (2) avant que l'article à suspendre au plafond ne soit relié à l'au moins un élément de liaison (40) de la plaque de base (2).

14. Procédé selon la revendication 1 dans lequel la plaque de base (2) comprend au moins deux pointes droites (91) qui s'étendent au moins sensiblement vers le haut à partir de la plaque de base (2), et dans lequel le procédé comporte une étape consistant à pousser la plaque de base (2) vers le haut contre le plafond de sorte que les pointes droites (91) pénètrent dans le plafond le long de chemins de pénétration linéaires pour maintenir la plaque de base (2) contre le plafond de sorte qu'une surface principale vers le haut (7) de la plaque de base (2) vient étroitement en butée contre le plafond.

15. Procédé selon la revendication 1 dans lequel une couche d'adhésif sensible à la pression (92) est présente sur une surface principale vers le haut (7) de la plaque de base (2) et dans lequel le procédé comporte une étape consistant à pousser la plaque de base (2) vers le haut en direction du plafond de sorte que la couche d'adhésif sensible à la pression (92) vient en contact avec le plafond et lie de manière adhésive la surface principale vers le haut (7) de la plaque de base (2) au plafond pour maintenir la plaque de base (2) contre le plafond de sorte qu'une surface principale vers le haut (7) de la plaque de base (2) vient étroitement en butée contre le plafond.
